# EUROPEAN PATENT SPECIFICATION

(11) **EP 1 189 477 B1**
(45) Date of publication and mention of the grant of the patent: **26.01.2011**
(21) Application number: 01120811.3
(22) Date of filing: 29.08.2001
(51) Int. Cl.: H04Q 11/00

(54) **Bit-rate-independent optical cross-connect device in optical transmission system**
Bitratenunabhängiger optischer Querverbinder in einem optischen Übertragungssystem
Commutateur optique indépendent du débit binaire dans un système de transmission optique

(30) Priority: 16.09.2000 KR 2000054478
(43) Date of publication of application: 20.03.2002
(73) Proprietor: SAMSUNG ELECTRONICS CO., LTD., Suwon-City, Kyungki-do (KR)
(72) Inventor: Lee, Han-Lim, c/o Samsung Electronics Co.,Ltd., Suwon-city, 442-370, Kyungki-do (KR); Kim,Byung-Jik, c/o Samsung Electronics Co.,Ltd., Suwon-city, 442-370, Kyungki-do (KR); Koh, Jun-Ho, c/o Samsung Electronics Co.,Ltd., Suwon-city, 442-370, Kyungki-do (KR); Hwang,Seong-Taek, c/o Samsung Electronics Co.,Ltd., Suwon-city, 442-370, Kyungki-do (KR); Oh, Yun-Je, c/o Samsung Electronics Co.,Ltd., Suwon-city, 442-370, Kyungki-do (KR)
(74) Representative: Grünecker, Kinkeldey, Stockmair & Schwanhäusser Anwaltssozietät

(56) References cited:
- EP-A- 0 878 926
- GB-A- 2 310 555
- US-A- 5 644 271
- US-A- 5 771 180
- US-A- 5 781 073
- US-A- 6 084 694

## Description

The present invention relates to an optical cross-connect device in an optical transmission system using an electrical switch, and more particularly to a bit-rate-independent optical cross-connect device using an electrical switch.

Generally, optical transmission systems use diverse protocols and diverse bit rates according to those protocols. For example, there are FDDI (Fiber Distributed Data Interface), ESCON (Enterprise Systems CONnectivity), optical fiber channel, gigabit Ethernet, and ATM (Asynchronous Transfer Mode), which may have diverse bit rates of, for example, 125 Mb/s, 155 Mb/s, 200 Mb/s, 622 Mb/s, 1,062 Mb/s, 1.25 Gb/s, and 2.5 Gb/s.

For an optical transmission system, a protocol and a bit rate meeting the optical transmission system are appropriately selected from diverse protocols and diverse bit rates based on those protocols. Optical receivers employed in such an optical transmission system and installed in repeaters or terminals are designed so that they operate only in accordance with the protocol and bit rate set for the optical transmission system.

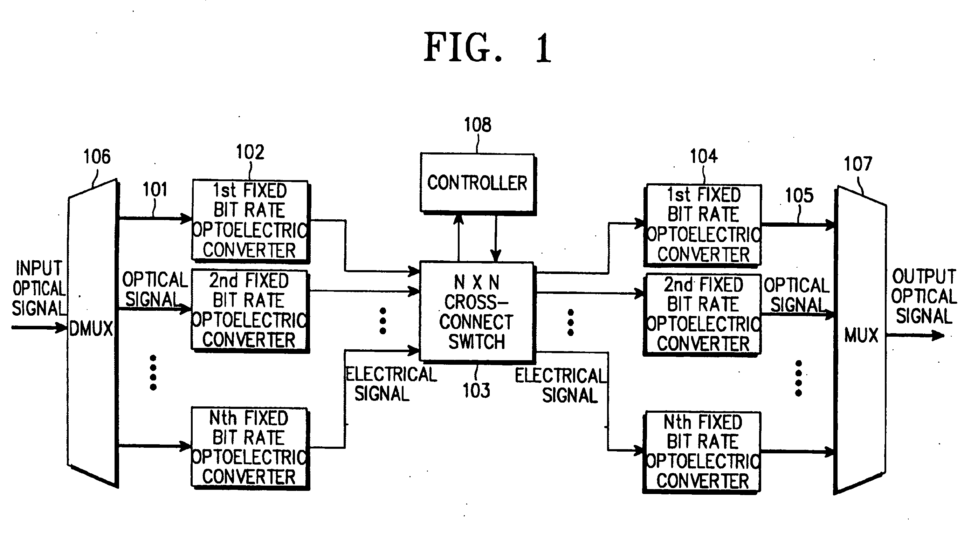

Fig. 1 is a block diagram illustrating a conventional optical cross-connect device using an electrical switch, which is used in an optical transmission system. As shown in Fig. 1, the optical transmission system includes a demultiplexer (DMUX) 106 for demultiplexing an input optical signal into optical signals respectively corresponding to diverse channels, a plurality of bit-rate-fixed optoelectric converters 102 for converting respective channel-corresponding optical signals, outputted from the demultiplexer 106, into electrical signals, and an NxN optical cross-connect switch 103 for receiving the electrical signals outputted from the bit-rate-fixed optoelectric converters 102, and routing those electrical signals along desired paths, respectively. The optical cross-connect device also includes a plurality of bit-rate-fixed electrooptic converter 104 for converting again the electrical signals, outputted from respective output ports of the optical cross-connect switch 103, into optical signals, respectively, and a multiplexer 107 for multiplexing the optical signals, outputted from the bit-rate-fixed electrooptic converter 104, through a single optical fiber. The optical cross-connect switch 103 is connected to a controller 108 so as to control inputting and outputting of data under the control of the controller 108.

Now, the operation of the optical cross-connect device having the above mentioned configuration will be described. An input optical signal is first applied to the demultiplexer 106 which, in turn, demultiplexes the optical signal into signals of different wavelengths. The optical signals outputted from the demultiplexer 106 are applied to respective input terminals of the bit-rate-fixed optoelectric converters 102 each supporting only a specific fixed bit rate. Inputting of an optical signal to each bit-rate-fixed optoelectric converter 102 is always made at a fixed bit rate. Electrical signals outputted from respective output terminals of the bit-rate-fixed optoelectric converters 102 are applied to respective input terminals of the NxN cross-connect switch 103. These electrical signals are then sent from respective switched output ports of the NxN cross-connect switch 103 to respective input terminals of the bit-rate-fixed electrooptic converters 104 each supporting only a specific fixed bit rate. Inputting of an electrical signal to each bit-rate-fixed electrooptic converter 104 is always made at a fixed bit rate. The electrical signals are converted again into optical signals by the bit-rate-fixed electrooptic converters 104, respectively, and then outputted as an output optical signal after being multiplexed by the multiplexer 107. The optical signals, which are outputted from the multiplexer 107, are transferred along a single optical fiber.

However, the conventional optical cross-connect device employed in optical transmission systems has a problem in that a desired connection for data transfer is enabled only for a particular transfer format because the optical cross-connect device is internally equipped with bit-rate-fixed optoelectric converters (optical receivers) and bit-rate-fixed electrooptic converters (optical transmitters). That is, the conventional optical cross-connect device has no ability to cope with a transfer format change and a variation in bit rate resulting from the transfer format change. This ability is called a "transparency". In particular, the conventional optical cross-connect device provides only a limited cross-connection in a fixed data network. For this reason, there are problems associated with multi-transfer and network management. Thus, the conventional cross-connect device using an electrical switch cannot check whether or not the switch operates normally.

Another conventional optical cross-connect device is disclosed in Korean Patent Application No. 2000-28076 (Self-Healing Bit Rate Converting Device in Optical Transmission System) filed in the name of the assignee of the present invention. The disclosed optical cross-connect device has a configuration including a bit rate discriminating unit and a temperature sensing unit for each BICDR (Bit Rate Independent Clock and Data Recovery). The bit rate discriminating unit and temperature sensing unit are coupled to a central control unit. Even when the optical cross-connect device having the above mentioned configuration operates normally, its BICDR transmitters and receivers exhibit a considerably high temperature. In particular, respective temperatures of the BICDR transmitters and receivers may be different from one another. For this reason, it is necessary to finely control respective bit rate discriminating units of the BICDR transmitters and receivers in an independent fashion. Furthermore, the bit rate discriminating units may have an increased probability of erroneous operations at a higher temperature. US 6,084,694 discloses a WDM optical network that is protocol and bit rate independent. However, this conventional optical network is not provided with any temperature measurement.

EP 878 926 A2 discloses an optical receiver. A regenerating circuit is provided for regenerating the phase of a data signal, with a temperature compensation being used to suppress temperature variations.

GB 2 310 555 A mentions that the phase of a clock signal output from a timing circuit may vary with a change in ambient temperature.

US 5,644,271 A, US 5,771,180 A, and US 5,781,073 A are related to methods for temperature compensation in an oscillator.

None of these documents, however, teaches how to make an optical cross-connect device bit-rate-independent.

It is, therefore, the object of the invention to provide a bit-rate-independent optical cross-connect device in which respective bit rate discriminating units for transmitters and receivers and a temperature sensing unit are integrated on a switchboard having a relatively large size.

This object is solved by a device with the features of claim 1.

According to an aspect of the invention, there is provided a bit-rate-independent optical cross-connect device in which a self-healing bit rate change function is provided in association with the use of an electrical switch, thereby being capable of securing a desired transparency for the bit rate change of a network.

In accordance with another aspect, the present invention provides an optical transmission system including a demultiplexer for demultiplexing an input optical signal into optical signals respectively corresponding to different channels, and a multiplexer for multiplexing the optical signals outputted from the demultiplexer, a bit-rate-independent optical cross-connect device comprising:
N BICDR (Bit Rate Independent Clock and Data Recovery) receivers each for receiving an associated one of the optical signals outputted from the demultiplexer, converting the associated optical signal into an electrical signal, and reproducing clocks and data from the associated optical signal, based on a bit rate of the electrical signal;
a switchboard including a cross-connect switch for receiving respective output signals from the N BICDR receivers, N bit rate discriminating units for receiving the output signals from the N BICDR receivers, respectively, thereby outputting bit rate discriminating signals respectively associated with the N BICDR receivers, and a temperature sensing unit for outputting a temperature sensing signal; and
a central processing unit for receiving the bit rate discriminating signals from the N bit rate discriminating unit, along with the temperature sensing signal from the temperature sensing unit, comparing each of the received bit rate discriminating signals with a temperature-dependent bit rate value read out, based on the temperature sensing signal, from a memory, thereby discriminating whether or not there is a variation in bit rate, and controlling the bit rate of the associated BICDR receiver, based on the result of the discrimination.

In accordance with another aspect, the present invention provides an optical transmission system including a demultiplexer for demultiplexing an input optical signal into optical signals respectively corresponding to different channels, and a multiplexer for multiplexing the optical signals outputted from the demultiplexer, a bit-rate-independent optical cross-connect device comprising:
N BICDR receivers each for receiving an associated one of the optical signals outputted from the demultiplexer, converting the associated optical signal into an electrical signal, and reproducing clocks and data from the associated optical signal, based on a bit rate of the electrical signal;
N BICDR transmitters each for receiving the electrical signal outputted from an associated one of the N BICDR receivers, converting the electrical signal into an optical signal, and reproducing clocks and data from the converted optical signal, based on a bit rate of the electrical signal;
a switchboard including a cross-connect switch for receiving respective electrical signals from the N BICDR receivers, and routing the electrical signals along desired paths, thereby sending the electrical signals to associated ones of the BICDR transmitters, respectively, 2N bit rate discriminating units for receiving respective output signals from the N BICR receivers and respective output signals from the N BICDR transmitters, thereby outputting bit rate discriminating signals respectively associated with the N BICDR receivers and the N BICDR transmitters, and a temperature sensing unit for outputting a temperature sensing signal; and
a central processing unit for receiving the bit rate discriminating signals from the 2N bit rate discriminating unit, along with the temperature sensing signal from the temperature sensing unit, comparing each of the received bit rate discriminating signals with a temperature-dependent bit rate value read out, based on the temperature sensing signal, from a memory, thereby discriminating whether or not there is a variation in bit rate, and controlling the bit rate of the associated BICDR receiver or transmitter, based on the result of the discrimination.

The above object and advantages of the present invention will become more apparent by describing in detail preferred embodiments thereof with reference to the attached drawings in which:
Fig. 1 is a block diagram illustrating an optical transmission system to which a conventional cross-connect device is applied; and
Fig. 2 is a block diagram illustrating an optical transmission system to which a cross-connect device according to a preferred embodiment of the present invention is applied.

Now, preferred embodiments of the present invention will be described in detail, with reference to the annexed drawings. In the following description of the present invention, a detailed description of known functions and configurations incorporated herein will be omitted as it may make the subject matter of the present invention rather unclear.

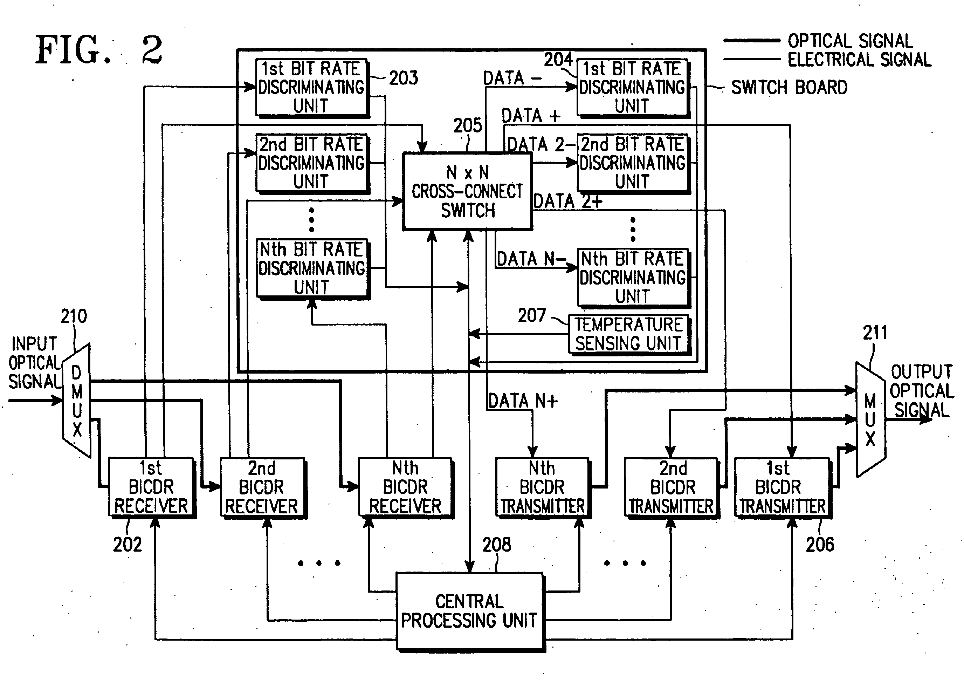

Fig. 2 is a block diagram illustrating the configuration of an NxN cross-connect device employed in an optical transmission system in accordance with the present invention. As shown in Fig. 2, the optical transmission system includes a demultiplexer (DMUX) 210 for demultiplexing an input optical signal into optical signals respectively corresponding to diverse channels, N BICDR receivers 202 for converting respective channel-corresponding optical signals, outputted from the demultiplexer 210, into electrical signals, and a switchboard including an NxN optical cross-connect switch 205 for receiving the electrical signals outputted from the BICDR receivers 202, and outputting those electrical signals at output ports thereof after routing the electrical signals along desired paths, respectively. The optical transmission system also includes N BICDR transmitters 206 for converting again the electrical signals, outputted from respective output ports of the optical cross-connect switch 205, into optical signals, respectively, and a multiplexer 211 for multiplexing the optical signals outputted from the BICDR transmitters 206, and a central processing unit 208 for controlling flows of the electrical signals.

Each BICDR receiver 202 receives an optical signal from the demultiplexer 210, and converts the received optical signal into an electrical signal. The BICDR receiver 202 also generates a "PLL (Phase Locked Loop) loss of lock" signal, based on a reference clock generated according to the bit rate of the electrical signal, to reproduce clocks and data. Each BICDR transmitter 206 receives an electrical signal from the central processing unit 208, and converts the received electrical signal into an optical signal which is, in turn, applied to the multiplexer 211. The BICDR transmitter 206 also generates a "PLL loss of lock" signal, based on a reference clock generated according to the bit rate of the electrical signal, to reproduce clocks and data. The central processing unit 208 compares a bit rate discriminating signal for each channel with information about temperature-dependent bit rate stored in a memory, thereby discriminating a variation in bit rate.

Based on the result of the discrimination, the central processing unit 208 changes respective bit rates of the associated BICDR receiver 202 and BICDR transmitter 206.

Two output signals are generated from a limiting amplifier internally provided at each of N BICDR receivers 202. One of the output signals from each BICDR receiver 202 is applied to an associated one of N bit rate discriminating units 203 on the switchboard whereas the other output signal is applied to the NxN optical cross-connect switch 205. Respective bit rate discriminating signals outputted from the N bit rate discriminating units 203 are inputted to the central processing unit 208. Meanwhile, N (-) data and N (+) data outputted from respective output ports of the optical cross-connect switch 205 are sent to the N bit rate discriminating units 204 and the N BICDR transmitters 206, respectively. 2N bit rate discriminating signals and one temperature information outputted from the switchboard are sent to the central processing unit 208. Each bit rate discriminating signal is compared with temperature-dependent bit rate information read out, based on the temperature information, from the memory of the central processing unit 208. Based on the result of the comparison for each bit rate discriminating signal, the central processing unit 208 determines whether or not there is a variation in bit rate, and sends, to the associated BICDR receiver or transmitter, a control signal for controlling the bit rate of the associated BICDR receiver or transmitter. Thus, the BICDR receivers 202 and BICDR transmitters 206 can automatically conduct a bit rate change, respectively. Since the switchboard has an integrated structure of the 2N bit rate discriminating units 203 and 204, the temperature sensing unit 207, and the optical cross-connect switch 205 while having a self-healing function to automatically conduct a desired bit rate change, there is enabled a simple interface to the central processing unit 208 and an easy control processing of the central processing unit 208.

Although the bit-rate-independent optical cross-connect device according to the illustrated embodiment has been described as being applied to both the receiver and transmitter of an optical transmission system, the present invention is not limited to this case. It is to be noted that the bit-rate-independent optical cross-connect device according to the present invention may be applied only to the receiver or to the transmitter.

As apparent from the above description, 2N bit rate discriminating units and one temperature sensing unit are integrated on a switchboard having a relatively large size in accordance with the present invention. Accordingly, it is possible to achieve a simple interface to the central processing unit and an easy control processing of the central processing unit. It is also possible to eliminate problems involved in conventional cases due to a high sensitivity of the transmitter and receiver to a variation in temperature. In accordance with the present invention, a self-healing bit rate change function is provided to a bit-rate-independent optical cross-connect device using an electrical switch, thereby securing a desired transparency for the bit rate change of a network.

## Claims

1. A bit-rate-independent optical cross-connect device for use in an optical transmission system including a demultiplexer (210) for demultiplexing an input optical signal into optical signals respectively corresponding to different channels, and a multiplexer (211) for multiplexing the optical signals outputted from the demultiplexer, the bit-rate-independent optical cross-connect device comprising:
a plurality of N BICDR (Bit Rate Independent Clock and Data Recovery) receivers (202) each for receiving an associated one of the optical signals outputted from the demultiplexer (210), converting the associated optical signal into an electrical signal, and reproducing clocks and data from the associated optical signal, based on a bit rate of the electrical signal;
a switchboard including a cross-connect switch (205) for receiving respective output signals from the N BICDR receivers (205),
**characterized by** the switchboard comprising a plurality N bit rate discriminating units (203) for receiving the output signals from the N BICDR receivers (202), respectively, thereby outputting bit rate discriminating signals respectively associated with the N BICDR receivers (202), and a temperature sensing unit (207) for outputting a temperature sensing signal; and
by the optical cross-connect device comprising a central processing unit (208) for receiving the bit rate discriminating signals from the N bit rate discriminating units (203), along with the temperature sensing signal from the temperature sensing unit (207), comparing each of the received bit rate discriminating signals with a temperature-dependent bit rate value read out, based on the temperature sensing signal, from a memory, thereby discriminating whether or not there is a variation in bit rate, and controlling the bit rate of the associated BICDR receiver (202), based on the result of the discrimination.

2. The bit-rate-independent optical cross-connect device of claim 1, further comprising:
a plurality of N BICDR transmitters (206) each for receiving the electrical signal outputted from
an associated one of the N BICDR receivers (202), converting the electrical signal into an optical signal, and reproducing clocks and data from the converted optical signal, based on a bit rate of the electrical signal; wherein
the switchboard cross-connect switch (205) is adapted for receiving respective electrical signals from the N BICDR receivers (202), and routing the electrical signals along desired paths, thereby sending the electrical signals to associated ones of the BICDR transmitters (206), respectively;
the switchboard further comprises N bit rate discriminating units (204) for receiving respective output signals from the N BICDR transmitters, thereby outputting bit rate discriminating signals respectively associated with the N BICDR receivers (202) and the N BICDR transmitters (206), and
the central processing unit (208) is adapted for receiving the bit rate discriminating signals from the 2N bit rate discriminating units (203,204), and for controlling the bit rate of the associated BICDR receiver (202) or transmitter (206).

## Patentansprüche

1. Bitratenunabhängige optische Cross-Connect-Vorrichtung zum Einsatz in einem optischen Übertragungssystem, das eine Demultiplexiereinrichtung (210) zum Demultiplexieren eines optischen Eingangssignals in optische Signale, die jeweils unterschiedlichen Kanälen entsprechen, und eine Multiplexiereinrichtung (211) zum Multiplexieren der von der Demultiplexiereinrichtung ausgegebenen optischen Signale enthält, wobei die bitratenunabhängige optische Cross-Connect-Vorrichtung umfasst:
eine Vielzahl von N BICDR-Empfängern (Bit Rate Independent Clock and Data Recovery receivers) (202), die jeweils dazu dienen, ein zugehöriges der von der Demultiplexiereinrichtung (210) ausgegebenen optischen Signale zu empfangen, das zugehörige optische Signal in ein elektrisches Signal umzuwandeln und Takte sowie Daten aus dem zugehörigen optischen Signal auf Basis einer Bitrate des elektrischen Signals zu reproduzieren;
ein Switchboard, das einen Cross-Connect-Switch (205) zum Empfangen jeweiliger Ausgangssignale von den N BICDR-Empfängern (205) enthält,
**dadurch gekennzeichnet, dass** das Switchboard eine Vielzahl von N Bitraten-Unterscheidungseinheiten (203), die jeweils die Ausgangssignale von den N BICDR-Empfängern (202) empfangen und Bitraten-Unterscheidungssignale ausgeben, die jeweils zu den N BICDR-Empfängern (202) gehören, sowie eine Temperaturerfassungseinheit (207) zum Ausgeben eines Temperaturerfassungssignals umfasst; und
**dadurch**, dass die optische Cross-Connect-Vorrichtung eine zentrale Verarbeitungseinheit (208) umfasst, die die Bitraten-Unterscheidungssignale von den N Bitraten-Unterscheidungseinheiten (203) zusammen mit dem Temperaturerfassungssignal von der Temperaturerfassungseinheit (207) empfängt, jedes der empfangenen Bitraten-Unterscheidungssignale mit einem temperaturabhängigen Bitratenwert vergleicht, der auf Basis des Temperatursignals aus einem Speicher ausgelesen wird, um so zu unterscheiden, ob eine Änderung der Bitrate vorliegt oder nicht, und die Bitrate des zugehörigen BICDR-Empfängers (202) auf Basis des Unterscheidungsergebnisses zu steuern.

2. Bitratenunabhängige optische Cross-Connect-Vorrichtung nach Anspruch 1, die des Weiteren umfasst:
eine Vielzahl von N BICDR-Sendern (206), die jeweils das von einem zugehörigen der N BICDR-Empfänger (202) ausgegebene elektrische Signal empfangen, das elektrische Signal in ein optisches Signal umwandeln und Takte sowie Daten aus dem umgewandelten optischen Signal auf Basis einer Bitrate des elektrischen Signals reproduzieren; wobei der Cross-Connect-Switch (205) des Switchboard so eingerichtet ist, dass er jeweilige elektrische Signale von den N BICDR-Empfängern (202) empfängt und die elektrischen Signale auf gewünschten Wegen leitet, um so die elektrischen Signale jeweils zu zugehörigen der BICDR-Sender (206) zu senden;
das Switchboard des Weiteren N Bitraten-Unterscheidungseinheiten (204) umfasst, die jeweilige Ausgangssignale von den N BICDR-Sendern empfangen und so Bitraten-Unterscheidungssignale ausgeben, die jeweils zu den N BICDR-Empfängern (202) und den N BICDR-Sendern (206) gehören, und
die zentrale Verarbeitungseinheit (208) so eingerichtet ist, dass sie die Bitraten-Unterscheidungssignale von den 2 N Bitraten-Unterscheidungseinheiten (203, 204) empfängt und die Bitrate des dazugehörigen BICDR-Empfängers (202) oder -Senders (206) steuert.

## Revendications

1. Brasseur optique indépendant du débit binaire destiné à être utilisé dans un système de transmission optique comprenant un démultiplexeur (210) pour démultiplexer un signal optique d'entrée en des signaux optiques correspondant respectivement à différent canaux, et un multiplexeur (211) pour multiplexer les signaux optiques fournis par le démultiplexeur, le brasseur optique indépendant du débit binaire comprenant :
une pluralité (202) de N récepteurs BICDR (Bit Rate Independent Clock and Data Recovery) pour recevoir chacun un des signaux optiques associé fourni par le démultiplexeur (210), convertissant le signal optique associé en un signal électrique, et reproduisant des horloges et des données à partir du signal optique associé sur la base d'un débit binaire du signal électrique ;
un tableau de distribution comprenant un interrupteur d'interconnexion (205) pour recevoir des signaux de sortie respectifs des N récepteurs BICDR (205),
**caractérisé en ce que** le tableau de distribution comprend une pluralité de N unités de différentiation du débit binaire (203) pour recevoir les signaux de sortie respectifs provenant des N récepteurs BICDR (202), fournissant ainsi des signaux respectifs de différentiation du débit binaire associés aux N récepteurs BICDR (202), et un capteur thermique (207) pour fournir un signal de détection de température ; et
et **en ce que** le brasseur optique comprend une unité de traitement centrale (208) pour recevoir les signaux de différentiation du débit binaire provenant des N unités de différentiation du débit binaire (203), ainsi que le signal de détection de température provenant du capteur thermique (207), compare chacun des signaux de différentiation du débit binaire reçus avec une lecture de valeur du débit binaire dépendant de la température, sur la base du signal de détection de température, à partir d'une mémoire, différencie ainsi s'il y a ou non une variation du débit binaire, et contrôle le débit binaire du récepteur BICDR associé (202), sur la base du résultat de la différentiation.

2. Brasseur optique indépendant du débit binaire selon la revendication 1, comprenant en outre :
une pluralité de N transmetteurs BICDR (206) pour recevoir chacun le signal électrique provenant d'un des N récepteurs BICDR associés (202), convertir le signal électrique en un signal optique, et reproduire des horloges et des données à partir du signal optique converti, sur la base d'un débit binaire du signal électrique ; dans lequel
l'interrupteur d'interconnexion du tableau de distribution (205) est adapté pour recevoir des signaux électriques respectifs des N récepteurs BICDR (202) et pour le routage des signaux électriques selon des chemins souhaités, envoyant ainsi les signaux électriques aux transmetteurs BICDR associés respectifs (206) ;
le tableau de distribution comprend en outre N unités de différentiation du débit binaire (204) pour recevoir des signaux de sortie respectifs des N transmetteurs BICDR, fournissant ainsi des signaux de différentiation respectifs du débit binaire associés aux N récepteurs BICDR (202) et aux N transmetteurs BICDR (206), et
l'unité de traitement centrale (208) est adaptée pour recevoir les signaux de différentiation du débit binaire provenant des 2N unités de différentiation du débit binaire (203, 204), et pour contrôler le débit binaire du récepteur (202) ou transmetteur (206) BICDR associé.
